# EUROPEAN PATENT APPLICATION

(11) **EP 4 745 167 A1**
(43) Date of publication of application: **20.05.2026**
(21) Application number: 24213516.8
(22) Date of filing: 18.11.2024
(51) Int. Cl.: C08F 220/14

(54) **POLYMERS AND POLYMER BLENDS COMPRISING FUNCTIONALIZED POLY(METH)ACRYLATES**

(71) Applicant: Evonik Operations GmbH, 45128 Essen (DE)
(72) Inventor: KERSTEN, Erik, 55288 Udenheim (DE); MOHR, Timo, 63549 Ronneburg (DE); ORSELLI, Enrico, 48147 Münster (DE); BESTGEN, Sebastian, 97080 Würzburg (DE); LEHMANN, Kathrin, 40883 Ratingen (DE); SCHNELL, Rupert, 67551 Worms (DE)
(74) Representative: Evonik Patent Association

(57) **Abstract**

The present invention relates to a functionalized poly(meth)acrylate, wherein the functionalized poly(meth)acrylate comprises of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0.5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate, to a blend containing the functionalized poly(meth)acrylate and at least two different polymers, and to a process for producing such blends and to the use thereof.

## Description

The present invention relates to a functionalized poly(meth)acrylate, wherein the functionalized poly(meth)acrylate comprises of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0.5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate, to a blend containing the functionalized poly(meth)acrylate and at least two different polymers, and to a process for producing such blends and to the use thereof.

Polyolefins, especially the homo- and copolymers from the class of polyethylenes, polypropylenes and polybutenes, form the largest class of the commonly used plastics and register the largest production volumes globally. Substantial fields of application of these materials are films, packagings and a very wide variety of injection moulded parts, for example for automotive manufacture. Especially in automotive manufacture it is important to produce these injection moulded parts with a well-modulated balance of strength and impact resistance in order to ensure the best possible everyday usability.

In order to ensure this balance it is common practice to employ mixtures comprising a component intended to ensure strength, usually a crystalline polypropylene, and a further component intended to ensure impact resistance, often a polyethylene-rich component. The latter component is often rubberlike and also tacky and the proportion of this component in the production process therefore cannot be increased as desired since the mixture would otherwise no longer be processable due to parts of the plant becoming gummed up.

In order to increase the quality of heterophasic polymer mixtures, in particular those comprising polyethylene, additives are often used to compatibilize the polymer mixtures.

US 5055521 A describes an agent which renders compatible at least two incompatible thermoplastic polymers. The agent contains one di- or trisequenced copolymer comprising at least one N-vinylpyrrolidone or methyl (meth) acrylate telomer and one mono- or difunctional oligomer selected from the group consisting of an ethylenically unsaturated polymerizable monomer, or a polycondensable monomer, or a lactam. The agent is prepared by condensation of the telomer with the oligomer and is used in the preparation of alloys of incompatible thermoplastic polymers.

US 2015259453 A1 describes a method of creating a modified heterophasic polyolefin composition, whereby a polyolefin composition having at least two phases is melt mixed with a free radical generator, such as a peroxide, and a compatibilizing agent characterized by at least one nitroxide radical and at least one unsaturated bond capable of undergoing a radical addition reaction. In the examples TEMPO-methacrylate is used as compatibilizing agent. The disadvantage of the teaching of this patent application is the need to use a peroxide.

In recent times there has been a further need to be able to process polyethylene terephthalate and polyethylene-containing recyclates into mixtures which after processing have material characteristics similar to those obtainable using virgin polyethylene terephthalate and polyethylene.

The problem addressed by the present invention was therefore that of providing a compatibilizing agent which solve one or more of the abovementioned problems.

It was found, surprisingly, that poly(meth)acrylate functionalized in a special way can solve one or more of the recited problems.

The present invention therefore provides a functionalized poly(meth)acrylate, wherein the functionalized poly(meth)acrylate comprises of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0,5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate.

The present invention also provides blends containing at least two different polymers and as a further constituent the functionalized poly(meth)acrylate according to the invention, comprising of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0.5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate.

The present invention further provides a process for producing a blend according to the invention and the use thereof as defined in the claims and more particularly described hereinbelow.

The functionalized poly(meth)acrylate according to the invention have the advantage that they can be processed in a reactive extrusion process, because they are stable under the conditions used in the reactive extrusion process and do not contain large amounts of residual monomers.

The functionalized poly(meth)acrylate according to the invention have the advantage that blends are available exhibiting improved material characteristics. The blends according to the invention in particular exhibit good/improved tensile strength (stress at yield) and impact strength at a moderate loss of tensile modulus.

A further advantage of the blends according to the invention is that they exhibit a good phase compatibility of polyethylene and polyethylene terephthalate when polyethylene and polyethylene terephthalate are present as the two different polymers.

Due to the use of the functionalized poly(meth)acrylates the blends according to the invention may also contain larger amounts of recyclate, in particular polyethylene terephthalate and/or polyethylene recyclate, without the material characteristics deteriorating to the extent that the material is no longer usable for the intended purpose.

The separation of polymer waste is currently often not yet operable in a single variety manner so that for example PET recyclates still contain small amounts of PE polymers. Especially for blends containing such non-single-variety recyclates the use according to the invention of the functionalized poly(meth)acrylates is particularly advantageous.

The functionalized poly(meth)acrylates according to the invention, the blends according to the invention, the process according to the invention and the use according to the invention of the blends are described by way of example hereinafter, without any intention that the invention be restricted to these illustrative embodiments. Where ranges, general formulae or compound classes are specified below, these are intended to comprise not only the corresponding ranges or groups of compounds which are explicitly mentioned but also all subranges and subgroups of compounds which can be obtained by removing individual values (ranges) or compounds. Where documents are cited in the context of the present description, their content shall fully form part of the disclosure content of the present invention, particularly in respect of the matters referred to. Where figures are reported hereinbelow in percent, these figures are percentages by weight unless otherwise stated. Where averages, for example molar mass averages, are reported hereinbelow, these are the numerical average unless stated otherwise. Where material characteristics, such as for example viscosities or the like, are reported hereinbelow, these are material characteristics at 25°C unless otherwise stated. Where chemical (empirical) formulae are used in the present invention, the reported indices may be either absolute numbers or average values. For polymeric compounds, the indices preferably represent average values.

The functionalized poly(meth)acrylate according to the invention comprises of from 50 to 99 parts by weight, preferably 70 to 85 part by weight of units based on methyl methacrylate, of from 0.1 to 5 parts by weight, preferably of from 0.5 to 2.5 parts by weight of units based on n-butyl acrylate, of from 0 to 30 parts by weight, preferably 15 to 25 parts by weight of units based on n-butyl methacrylate, and of from 0.5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate.

The functionalized poly(meth)acrylate preferably has a weight average molecular weight of from 50,000 to 200,000, more preferably of from 70,000 to 120,000 g/mol determined according to the method of measurement given in the example section below.

The functionalized poly(meth)acrylate according to the invention preferably has a particle size d₅₀ of at least 100 µm, more preferably of from 105 µm to 200 µm determined according to the method of measurement given in the example section below. The particle size of the functionalized poly(meth)acrylate according to the invention can be influenced and adjusted during the suspension polymerisation process via the stirring speed, the amount of suspension stabilizer and the solids content. An average particle size of at least 100 µm is advantageous for the processability using an extruder.

Most preferred functionalized poly(meth)acrylates have a weight average molecular weight of from 50,000 to 200,000, more preferably of from 70000 to 120000 g/mol determined according to the method of measurement given in the example section below and a particle size d₅₀ of at least 100 µm, more preferably of from 110 µm to 200 µm determined according to the method of measurement given in the example section below.

The functionalized poly(meth)acrylates can be prepared by polymerisation methods known in the art. Preferably the functionalized poly(meth)acrylates are prepared by suspension polymerisation. A suitable process for suspension polymerisation is described in the example section.

The functionalized poly(meth)acrylates according to the invention can be used as additive in different kinds of polymers or polymer blends. Preferably the functionalized poly(meth)acrylates according to the invention are used in blends according to the invention.

The blend according to the invention contains at least two different polymers and it contains as a further constituent the functionalized poly(meth)acrylate according to the invention. The functionalized poly(meth)acrylate comprises of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0,5 to 5 parts by weight, preferably 1 to 2 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate.

The blend may contain as one of the two different polymers a polyester, preferably polyethylene terephthalate or polybutylene terephthalate, a polyamide, or an ethylene vinyl alcohol and as the other one of the two different polymers a polyolefin, preferably polyethylene or polypropylene, polystyrene, polymethylmethacrylate, polyvinylchloride, poly(acrylonitrile-styrene-acrylate), poly(acrylonitrile-butadiene-styrene), and/or polycarbonate. Preferably the blend contains polyethylene and/or polypropylene as one of the two different polymers and polyethylene terephthalate as the other one of the two different polymers. More preferably the blend contains polyethylene as one of the two different polymers and polyethylene terephthalate as the other one of the two different polymers.

Preferably at least one of the two different polymers is at least partially, preferably completely, a recyclate. More preferably two of the at least two different polymers are at least partially, preferably completely, recyclates.

The proportion of the functionalized poly(meth)acrylate is preferably from 0.5% to 15 %, more preferably 2% to 10 %, and particularly preferably 2.5 % to 7.5 % by weight based on the total weight of the blend.

The proportion of the polyethylene in the blend is preferably from 2 % to 20 % by weight, more preferably from 5 % to 15 % by weight and particularly preferably from 7.5 % to 12.5 % by weight and the proportion of the polyethylene terephthalate is preferably from 80 % to 98 % by weight, more preferably from 85 % to 95 % by weight and particularly preferably from 87.5 % to 92.5 % by weight based on the total mass of the at least two different polymers.

The blend according to the invention preferably has a Tensile modulus of from 2200 to 2600 MPa, determined according to the method of measurement given in the example section below.

The blend according to the invention preferably has an Impact Strength of from 8 to 26 kJ/m², determined according to the method of measurement given in the example section below.

The blend according to the invention preferably has a Stress of Yield Tensile modulus of from 24 to 34 MPa, determined according to the method of measurement given in the example section below.

The blend according to the invention preferably shows a MFI 2.16@250°C of from 4 to 25 g/10 min, preferably of from 14 to 20 g/10 min, determined according to the method of measurement given in the example section below.

Most preferably the blend according to the invention shows a Tensile modulus of from 2200 to 2600 MPa, an Impact Strength of from 8 to 26 kJ/m², a Stress of Yield Tensile modulus of from 24 to 34 MPa, and a MFI 2.16@250°C of from 4 to 25 g/10 min, preferably of from 14 to 20 g/10 min, all determined according to the methods of measurement given in the example section below.

The blends according to the invention can be produced by any suitable process known in the art. Preferably the blends according to the invention are produced by the process according to the invention. The inventive process for producing blends according to the invention is characterized in that the constituents are commixed. Preferably the constituents are employed and mixed as powder or pellets. It might be preferably that the pellet mixture is extruded to afford a mixed pellet material.

In the process according to the invention the constituents are preferably employed and mixed as powders or pellets. It may be advantageous when a pellet mixture thus obtained is processed into a mixed pellet material, for example by extruding the pellet mixture. The pellet mixture may thus be applied for example via a mixing drum or using hoppers the pellets may be charged via a mixing funnel and thus homogeneously sent to a further pelletizing process in a mixing extruder before this additized pellet material is then subjected to the further processing operations. It is alternatively also possible via a sequence of extruders to meter the components as a melt stream into an extruder which then opens into a moulding process. Furthermore one of these processes may also be used to fabricate the final workpiece directly via an extrusion or injection moulding process without proceeding via the granulate.

A preferred process according to the invention contains a step which comprises the production of packagings, films, injection moulded parts, pipes, hoses, fibres, textiles, bottles, plastic housings, masterbatch compounds for improved pigment dispersion, manufacturing plastics in the automotive or transport sectors.

The blends according to the invention can be used as, or for the production of, packaging, films, injection moulded parts, pipes, hoses, fibres, textiles, bottles, plastic housings, masterbatch compounds for improved pigment dispersion, manufacturing plastics in the automotive or transport sectors.

Even without further elaboration it is assumed that a person skilled in the art is able to utilize the description above to the greatest possible extent. The preferred embodiments and examples are therefore to be interpreted merely as a descriptive disclosure which is by no means limiting in any way whatsoever.

The subject-matter of the present invention is more particularly elucidated in the examples which follow, without any intention that the subject-matter of the present invention be restricted to these.

### Examples

### Methods of measurement:

### Tensile tests:

The tensile tests were performed according to EN ISO 527-1. A Zwick BT1-FB010TH.D30 test apparatus was employed. Determination of the Charpy Impact strength was done according to UNE-EN ISO 179.

### Molecular weight determination:

Mw stands for weight-average molecular weight and Mn stands for number-average molecular weight. The molecular weights Mw and Mn are determined by GPC [gel permeation chromatography] as described in DIN 55 672-1. Specifically, GPC was performed at 35°C. THF was used as mobile phase with a flow rate of 1 mL/min and one SDV Guard column (50 x 7.5 mm, precolumn) and four SDV columns (300 x 7.5 mm) were used as the stationary phase. Detection was performed by means of an RI detector. The datasets were evaluated using WinGPC software (Polymer Standards Service, Mainz) and polystyrene calibration with Mark-Howink transformation to PMMA. The polydispersity (Mw/Mn), also known as molecular weight distribution, is obtained by dividing the weight-average molecular weight by the number-average molecular weight.

### Viscosity at 190°C:

The viscosity was determined at 190°C by measurements with a rotary viscometer as per DIN 53 019. Measurements are performed using a Brookfield CAP 2000+ cone-plate viscometer with a viscosity-dependent shear rate as per the following Table a:

**Table a:**

| Cone | Shear rate | Eta (at 10% torque utilization) | Eta (at 100% torque utilization) |
|---|---|---|---|
| 07 | 10 s⁻¹ | 6 300 mPas | 63 000 mPas |
| 08 | 10 s⁻¹ | 25 000 mPas | 250 000 mPas |
| 07 | 30 s⁻¹ | 2 100 mPas | 21 000 mPas |

Calibration of the Brookfield viscometer was carried out using a 500 000 BW Newtonian standard sample. This was obtained from Zentrum für Messen und Kalibrieren & Analytik GmbH and issued with an accompanying calibration certificate. Instrument calibration is performed only upon changing the DKD oil using DKD oil from ZMK& ANALYTIK GmbH. This is performed using cone 7. An initial measurement of the new DKD oil is initially taken. This is followed by calibration of the instrument. The Newtonian standard sample is weighed in directly onto the spindle. This comprises placing it upside down in a 100 ml Erlenmeyer flask and weighing in the appropriate amount. The spindle is subsequently mounted in the viscometer and lowered. After maintaining preheating for at least 3 min, `Spindle' is depressed in the control panel and confirmed with 'Enter'. The prompt 'Calibrate YES / NO' appears. Selecting 'YES' initiates calibration mode. The desired temperature and the dynamic viscosity (see current calibration certificate) of the fluid are subsequently inputted and confirmed. It should be noted here that the viscosity figure must be entered in cP (cP = mPas). In response to the prompt 'SPEED' 10 s-1 is inputted and confirmed with 'Enter'. The calibration is then initiated with 'Run'. After calibration, the calibration value is stored with 'Enter'.

### Particle Size Distribution:

The particle size was determined by measurements with a Coulter LS 13 320 with Polarization Intensity Differentia Scattering (PIDS) in a range of 0.4 to 2000 µm. The polymer samples were dispersed with 0.05 wt.% aqueous Tetra-Sodium-Diphosphate-Decahydrate (Merck Art. 1.06591.0500).
Software: Beckman Coulter LS, Vers. 6.03, Nov. 2009
Evaluation: Fraunhofer-Evaluation Model (Theory)
(https://www.beckman.de/en/resources/technologies/laser-diffraction)

### Melt flow index (MFI):

The MFI 2.16kg@250°C was determined according to ISO 1133-1:2011 using a Zwick MFlow instrument.

### Employed substances:

| Substances | Abbreviation | Provider |
|---|---|---|
| N-(2-Methacryloyloxyethyl) ethylene urea | MEEU | Evonik Operations GmbH |
| 2,2,6,6-tetramethylpiperidin-4-yl methacrylate | TEMPMA | Evonik Operations GmbH |
| Glycerol carbonate methacrylate | GCMA | Evonik Operations GmbH |
| Hydroxy butyl methacrylate | HBMA | Evonik Operations GmbH |
| 2-Methacryloyloxyethyl succinate | HEMA-Succinate | Evonik Operations GmbH |
| Methyl methacrylate | MMA | Röhm GmbH |
| n-butyl acrylate | n-BA | Merck KGaA |
| n-butyl methacrylate | n-BuMA | Merck KGaA |
| Blend of polyethylene terephthalate (PET) and polyethylene (PE), ID1737 | ID1737 | Plastship GmbH |
| CirKular+ C1010 | C1010 | Kraton Corporation |
| Anhydride modified polyethylene | Fusabond E226 | Dow Chemicals |
| Sodium C9-22 Alkyl sec-Sulfonate EMULGATOR E30-40 | E30-40 | Vantage Leuna GmbH |
| trisodium salt of methylglycine diacetic acid | Trilon^{®} M | BASF SE |

### Example 1a + b: Production of the functionalized poly(meth)acrylates

2730 g demineralized water, 17.8 g aluminum sulfate, 9.3 g sodium carbonate, 0.29 g polyethylene glycol, 0.46 g Trilon^{®} M and 0.29 g E30-40 presented and mixed in a 5-liter jacketed container (receiving vessel) with a connected thermostat, reflux condenser, paddle stirrer with 250 rpm and internal thermometer. 22 g n-butyl acrylate, 1691 g methyl methacrylate, 436 g n-butyl methacrylate, 32.8 g N-(2-methacryloyloxyethyl) ethylene urea (MEEU) or glycerol carbonate methacrylate (GCMA), 14.2 g 2-ethylhexyl thioglycolate and 11.35 g tert-amyl-2-ethylperoxyhexanoate were mixed in a container and then dosed into the receiving vessel. The reaction mixture was polymerized at 78°C while stirring. The suspension was then filtered, washed and dried.

### Example 1c:

2735 g Demineralized water and 13.1 g Polyvinyl alcohol presented and mixed in a 5-liter jacketed container with a connected thermostat, reflux condenser, paddle stirrer with 300 rpm and internal thermometer. 22 g n-butyl acrylate, 1691 g methyl methacrylate, 436 g n-butyl methacrylate, 32.8 g 2,2,6,6-tetramethylpiperidin-4-yl methacrylate (TEMPMA), 14.2 g 2-ethylhexyl thioglycolate and 11.35 g tert-amyl-2-ethylperoxyhexanoate were mixed in a container and then dosed into the receiving vessel. The reaction mixture was polymerized at 78°C while stirring. The suspension was then filtered, washed and dried.

The functional monomer used in Example 1 are given in Table b.

**Table b: functional monomer used in Example 1**

| Example 1 | Functional Monomer |
|---|---|
| a | N-(2-methacryloyloxyethyl) ethylene urea |
| b | glycerol carbonate methacrylate GCMA |
| c | 2,2,6,6-tetramethylpiperidin-4-yl methacrylate TEMPMA (CAS 31582-45-3) |

### Example 2: Production of blends

The functionalized poly(meth)acrylates of example 1 and for comparison Fusabond E226 and C1010 were used to produce blends comprising 90 part by weight of PET and 10 parts by weight of PE (ID1737). The amount of functionalized poly(meth)acrylate used is given in table d. The sum of the amounts of functionalized poly(meth)acrylates and ID1737 adds up to 100 parts by weight.

Prior to the blending process, a homogenization step was conducted with the PET/PE material (ID1737). The process was carried out using a co-rotating twin screw extruder (Coperion ZSK 26), in order to obtain high homogeneity of the material. The ID1737 was introduced into the extruder using a loss-in-weight feeder. For achieving a good dispersion, a medium shear screw design was used. The material was extruded into strands, cooled in a water bath and cut to 3x3mm pellets in a conventional pelletizer. The process parameters used for homogenization process are presented in Table c.

**Table c. Compounding parameters**

| T (°C) | V (rpm) | Q (kg/h) |
|---|---|---|
| 240/260/260/255/255/255/250/250/250 | 200 | 15 |

The different compatibilizers were then blended with the ID1737 material at different ratios (Table d). The equipment and process parameters (temperature and screw speed) used for the blending of compatibilizers are the same as the ones used for the homogenization of the PET/PE material (Table c).

**Table d:**

| Example 2 | Functionalized Polymethacrylate | amount in parts by weight |
|---|---|---|
| a | Example 1a | 0 |
| b | Example 1a | 3 |
| c | Example 1a | 6 |
| d | Example 1b | 3 |
| e | Example 1b | 6 |
| f | Example 1c | 3 |
| 9 | Example 1c | 6 |
| h | Fusabond E226 | 3 |
| i | Fusabond E226 | 6 |
| j | C1010 | 3 |
| k | C1010 | 6 |

The blends obtained in Example 2 were tested using the methods given above. The results are given in table e.

All compounds produced as pellets were converted in a pilot-plant injection moulding machine ENGEL Victory 50, with a clamping force of 50 tons. Parts to be injected were standard ISO A test specimens (dog-bones).

**Table e: Parameters of the blends tested**

| Blend | MFI 2.16@250°C [g/10 min] | Stress at Yield (MPa) | Impact Strength (kJ/m²) | Tensile Modulus (MPa) |
|---|---|---|---|---|
| Example 2a | 12.0 | 23.7 | 713 | 2520 |
| Example 2b | | 28.6 | 20.8 | 2350 |
| Example 2c | 4.5 | 26.8 | 15.9 | 2450 |
| Example 2d | | 27.7 | 22.9 | 2320 |
| Example 2e | 16.0 | 24.0 | 12.0 | 2520 |
| Example 2f | | 30.5 | 15.5 | 2340 |
| Example 2g | 17.6 | 29.5 | 26.3 | 2520 |
| Example 2h | | 27.9 | 28.8 | 2210 |
| Example 2i | 5.7 | 25.2 | 15.4 | 2080 |
| Example 2j | | 35.4 | 51.2 | 2040 |
| Example 2k | | 35.0 | 52.,3 | 1980 |

It can be seen from table e that the blends according to the invention comprising a functionalized poly(meth)acrylate according to the invention show higher Stress at Yield values as well as higher Impact Strength values than blends containing no functionalized poly(meth)acrylate but comparable Tensile Modulus values. The blends comprising commercially available additives show higher values for Impact strength but also a loss in Tensile Modulus.

Depending on the functionalization used the melt flow index can be adjusted to be higher than that of a blend without functionalized poly(meth)acrylate or lower.

## Claims

1. Functionalized poly(meth)acrylate, characterized that the functionalized poly(meth)acrylate comprises of from 50 to 99 parts by weight of units based on methyl methacrylate, of from 0.1 to 5 parts by weight of units based on butyl acrylate, of from 0 to 30 parts by weight, preferably 15 to 25 party by weight of units based on n-butyl methacrylate, and of from 0.5 to 5 parts by weight, preferably 1 to 3 parts by weight of units based on functionalized methacrylates selected from N-(2-Methacryloyloxyethyl) ethylene urea, 2,2,6,6-Tetramethyl-4-piperidyl methacrylate, and glycerine carbonate methacrylate.

2. Functionalized poly(meth)acrylate according to Claims 1, **characterized in that** the functionalized poly(meth)acrylate has a weight average molecular weight of from 50,000 to 200,000 g/mol, preferably of from 70,000 to 120,000 g/mol determined according to the method of measurement given in the description.

3. Functionalized poly(meth)acrylate according to Claims 1 or 2, **characterized in that** the functionalized poly(meth)acrylate used has a particle size d₅₀ of at least 100 µm determined according to the method of measurement given in the description.

4. Blend containing at least two different polymers, **characterized in that** it contains as a further constituent a functionalized poly(meth)acrylate according to any one of Claims 1 to 3.

5. Blend according to Claim 4, **characterized in that** it contains as one of the two different polymers a polyester, preferably polyethylene terephthalate or polybutylene terephthalate, a polyamide, or an ethylene vinyl alcohol and as the other one of the two different polymers polyethylene, polypropylene, polystyrene, polymethylmethacrylate, polyvinylchloride, poly(acrylonitrile-styrene-acrylate), poly(acrylonitrile-butadiene-styrene), and/or polycarbonate, preferably polyethylene and/or polypropylene as one of the two different polymers and polyethylene terephthalate as the other one of the two different polymers, and more preferably polyethylene as one of the two different polymers and polyethylene terephthalate as the other one of the two different polymers.

6. Blend according to Claim 4 or 5, **characterized in that** at least one of the two different polymers, preferably both of the two different polymers is (are) at least partially, preferably completely, a recyclate(s).

7. Blend according to any of Claims 4 to 6, **characterized in that** the proportion of the functionalized poly(meth)acrylate is from 0.5 % to 15 %, preferably 2% to 10 %, particularly preferably 2.5 % to 7.5 % by weight based on the total weight of the blend.

8. Blend according to any of Claims 4 to 7, **characterized in that** the proportion of the polyethylene in the blend is from 2 % to 20 % by weight, preferably from 5 % to 15 % by weight and particularly preferably from 7.5 % to 12.5 % by weight and the proportion of the polyethylene terephthalate is from 80 % to 98 % by weight, preferably from 85 % to 95 % by weight and particularly preferably from 87.5 % to 92.5 % by weight based on the total mass of the at least two different polymers.

9. Blend according to any of Claims 4 to 8, **characterized in that** the blend has a Tensile modulus of from 2200 to 2600 MPa, determined according to the method of measurement given in the description.

10. Blend according to any of Claims 4 to 9, **characterized in that** the blend has an Impact Strength of from 8 to 26 kJ/m², determined according to the method of measurement given in the description.

11. Blend according to any of Claims 4 to 10, **characterized in that** the blend has a Stress of Yield Tensile modulus of from 24 to 34 MPa, determined according to the method of measurement given in the description..

12. Process for producing blends according to any of Claims 4 to 11, **characterized in that** the constituents are commixed.

13. Process according to Claim 12, **characterized in that** the constituents are employed and mixed as powder or pellets.

14. Process according to Claim 13, **characterized in that** the pellet mixture is extruded to afford a mixed pellet material.

15. Process according to any of Claims 12 to 14, **characterized in that** it contains a step which comprises the production of packagings, films, injection moulded parts, pipes, hoses, fibres, textiles, bottles, plastic housings, masterbatch compounds for improved pigment dispersion, manufacturing plastics in the automotive or transport sectors.

16. Use of a blend according to any of Claims 4 to 11 as, or for the production of packaging, films, injection moulded parts, pipes, hoses, fibres, textiles, bottles, plastic housings, masterbatch compounds for improved pigment dispersion, manufacturing plastics in the automotive or transport sectors.
